# EUROPEAN PATENT APPLICATION

(11) **EP 3 835 173 A1**
(43) Date of publication of application: **16.06.2021**
(21) Application number: 20212806.2
(22) Date of filing: 09.12.2020
(51) Int. Cl.: B62D 1/20

(54) **TELESCOPIC SHAFT AND STEERING SYSTEM**

(30) Priority: 13.12.2019 JP 2019225632
(71) Applicant: JTEKT CORPORATION, Chuo-ku, Osaka-shi, Osaka 542-8502 (JP)
(72) Inventor: TOMIMATSU, Hiroyasu, Osaka-shi,, Osaka 542-8502 (JP)
(74) Representative: Winter, Brandl - Partnerschaft mbB

(57) **Abstract**

A telescopic shaft (10; 10a) includes an internal shaft (30) having an external toothing (31) on an outer peripheral surface (30a), an external shaft (20) having an internal toothing (21) on an inner peripheral surface (20a), and a sliding member (50; 90) arranged between the external toothing (31) and the internal toothing (21) and fixed to one of the external toothing and the internal toothing. The sliding member (50; 90) is slidable in an axial direction relative to the other one of the external toothing (31) and the internal toothing (21). The sliding member (50; 90) includes a wall (55; 95) at an end between the sliding member (50; 90) and the other one of the external toothing (31) and the internal toothing (21). The wall (55; 95) protrudes toward the other one of the external toothing (31) and the internal toothing (21).

## Description

### BACKGROUND OF THE INVENTION

### 1. Field of the Invention

The present invention relates to a telescopic shaft and a steering system including a telescopic shaft.

### 2. Description of Related Art

Steering systems mounted on vehicles include a shaft member configured to transmit a rotational torque for steering steered wheels. The shaft member includes a telescopic shaft extensible and contractible in an axial direction.

For example, Japanese Unexamined Patent Application Publication No. 2009-191936 (JP 2009-191936 A) discloses a telescopic shaft including a male shaft and a female shaft. The male shaft has a non-circular outer peripheral shape. The female shaft has a non-circular inner peripheral shape, and is externally fitted to the outer periphery of the male shaft so as to be relatively movable in an axial direction and to transmit a rotational torque. In the telescopic shaft, a plurality of partial sleeves is arranged in a clearance between the non-circular inner periphery and the non-circular outer periphery. Each partial sleeve is attached to the male shaft. A groove-shaped grease reservoir is provided on the outer periphery of the partial sleeve. Thus, grease can be supplied between the outer periphery of the partial sleeve and the inner periphery of the female shaft.

### SUMMARY OF THE INVENTION

As in the telescopic shaft described above, it is effective, for improvement in slidability, that the telescopic shaft including the male shaft (internal shaft) and the female shaft (external shaft) has the grease reservoir in a sliding member such as the partial sleeve arranged between the outer periphery of the internal shaft and the inner periphery of the external shaft. In the related-art telescopic shaft having the grease reservoir, however, so-called grease depletion may occur because the grease leaks outward in the axial direction from the sliding member. Thus, a friction force increases between the sliding member and its sliding counterpart (for example, the inner peripheral surface of the external shaft). The increase in the friction force may cause troubles such as a backlash between the internal shaft and the external shaft, or damage to the sliding member.

The present invention provides a telescopic shaft improved in reliability, and a steering system including the telescopic shaft.

A first aspect of the present invention relates to a telescopic shaft. The telescopic shaft includes an internal shaft, an external shaft, and a sliding member. The internal shaft has an external toothing on an outer peripheral surface. The external toothing includes a plurality of teeth arrayed in a circumferential direction. The external shaft has an internal toothing on an inner peripheral surface. The internal toothing includes a plurality of teeth disposed at positions where the internal toothing meshes with the external toothing. The sliding member is disposed between the external toothing and the internal toothing, and is fixed to one of the external toothing and the internal toothing. The sliding member is disposed so as to be slidable in an axial direction relative to the other one of the external toothing and the internal toothing. The sliding member includes a wall at an end of the sliding member between the sliding member and the other one of the external toothing and the internal toothing. The wall protrudes toward the other one of the external toothing and the internal toothing. The end is an axial end of the sliding member in a clearance extending in the axial direction.

According to the structure described above, it is possible to provide the telescopic shaft improved in reliability.

A second aspect of the present invention relates to a steering system. The steering system includes a telescopic shaft configured to transmit a rotational torque to be used for turning a steered wheel. The telescopic shaft includes an internal shaft, an external shaft, and a sliding member. The internal shaft has an external toothing on an outer peripheral surface. The external toothing includes a plurality of teeth arrayed in a circumferential direction. The external shaft has an internal toothing on an inner peripheral surface. The internal toothing includes a plurality of teeth disposed at positions where the internal toothing meshes with the external toothing. The sliding member is disposed between the external toothing and the internal toothing, and is fixed to one of the external toothing and the internal toothing. The sliding member is disposed so as to be slidable in an axial direction relative to the other one of the external toothing and the internal toothing. The sliding member includes a wall at an end of the sliding member between the sliding member and the other one of the external toothing and the internal toothing. The wall protrudes toward the other one of the external toothing and the internal toothing. The end is an axial end of the sliding member in a clearance extending in the axial direction.

According to the structure described above, it is possible to provide the steering system including the telescopic shaft improved in reliability.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating an overview of the structure of a steering system according to an embodiment;
FIG. 2 is a perspective view of an appearance of a telescopic shaft according to the embodiment;
FIG. 3 is an exploded perspective view of the telescopic shaft according to the embodiment;
FIG. 4 is a perspective view of an appearance of an external shaft according to the embodiment;
FIG. 5 is a perspective view of an appearance of a sliding member according to the embodiment;
FIG. 6 is a first sectional view of the telescopic shaft according to the embodiment;
FIG. 7 is a second sectional view of the telescopic shaft according to the embodiment;
FIG. 8 is a third sectional view of the telescopic shaft according to the embodiment;
FIG. 9 is a local sectional view of a telescopic shaft according to a modified example of the embodiment; and
FIG. 10 is a diagram illustrating a part of the axial end of a sliding member according to the modified example of the embodiment.

### DETAILED DESCRIPTION OF EMBODIMENTS

An embodiment and its modified example are described below in detail with reference to the drawings. The embodiment and the modified example are comprehensive or specific examples. Numerical values, shapes, materials, constituent elements, arrangements and connection forms of the constituent elements, steps, the order of the steps, and the like described in the embodiment and the modified example are examples, but are not intended to limit the present invention.

The drawings are schematic drawings in which objects are emphasized, omitted, or adjusted in terms of their proportions as appropriate to demonstrate the present invention. Therefore, shapes, positional relationships, and proportions may differ from actual shapes, positional relationships, and proportions. In the following embodiment and the claims, expressions of relative directions or postures such as "parallel" and "orthogonal" may be used, but include directions or postures deviating from the strict directions or postures. For example, an expression "two directions are parallel" means not only that the directions are completely parallel, but also that the directions are substantially parallel, that is, include a difference of about several percent.

### 1. Overview of Structure of Steering System

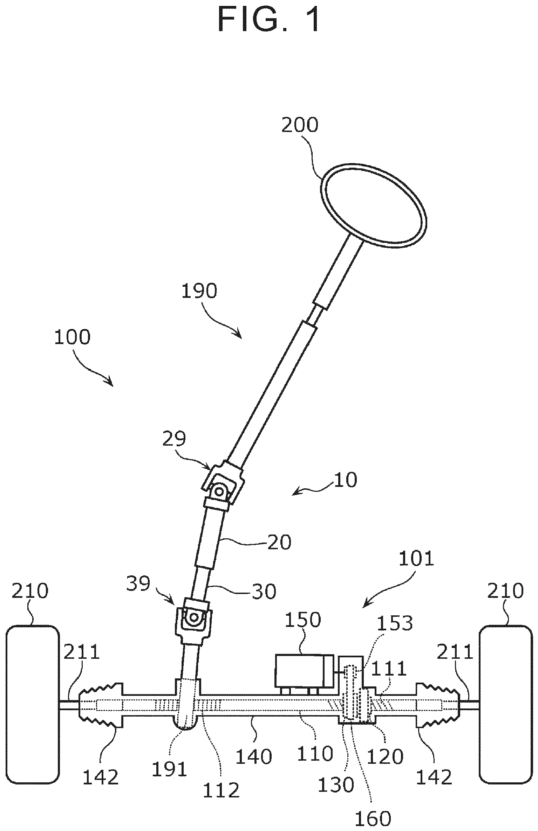

First, an overview of the structure of a steering system 100 according to the embodiment is described with reference to FIG. 1. FIG. 1 is a diagram illustrating the overview of the structure of the steering system according to the embodiment. As illustrated in FIG. 1, the steering system 100 according to this embodiment turns steered wheels 210 based on a rotational torque generated by a driver who operates an operation member 200 such as a steering wheel.

The steering system 100 includes a steering column shaft 190, a telescopic shaft 10, a belt transmission device 101, a shaft 110, a ball nut 120, and a housing 140. The operation member 200 is coupled to one end of the steering column shaft 190. The belt transmission device 101 includes an assist motor 150, a driving pulley 153, a driven pulley 130, and a belt 160.

The steering column shaft 190 mechanically transmits a rotational torque generated in response to a driver's operation for the operation member 200 to the shaft 110 via the telescopic shaft 10. The shaft 110 is a rod-shaped member having grooves 111 on a part of its outer peripheral surface in an axial direction. The shaft 110 is connected to the steered wheels 210 via tie rods 211 to function as a steering operation shaft configured to turn the steered wheels 210. The shaft 110 is provided with a rack 112, and a rack and pinion mechanism is formed such that the rack 112 meshes with a pinion gear of a pinion shaft 191. The steering system 100 is a so-called electric power steering system in which the rotational torque transmitted via the steering column shaft 190 is converted into a linear motion of the shaft 110 and an assist torque generated by the assist motor 150 is converted into a linear motion of the shaft 110. In FIG. 1, the assist torque generated by the assist motor 150 is transmitted to the shaft 110 via the driving pulley 153, the belt 160, the driven pulley 130, and the ball nut 120, but the method for transmitting the assist torque to the shaft 110 is not particularly limited. For example, the assist torque generated by the assist motor 150 may be transmitted to the shaft 110 via the pinion gear. The steering system 100 need not be the electric power steering system, but may have a structure for turning the steered wheels 210 only by the rotational torque transmitted via the steering column shaft 190.

The housing 140 houses the shaft 110. In this embodiment, the housing 140 is fixed to a vehicle body by using a bracket formed integrally with the housing 140, retains the housed shaft 110, and guides movement of the shaft 110. For example, the housing 140 is made of an aluminum alloy. Bellows-shaped tubular boots 142 made of rubber or the like are attached to both ends of the housing 140. The boots 142 seal both open ends of the housing 140 in its longitudinal direction, thereby preventing water or dirt from entering the housing 140.

For example, the telescopic shaft 10 of this embodiment is a shaft member called "intermediate shaft", which is extensible and contractible, and mechanically connects the steering column shaft 190 to the pinion shaft 191. The telescopic shaft 10 includes a tubular external shaft 20 and a solid internal shaft 30. In this embodiment, the external shaft 20 and the internal shaft 30 are made of a metal such as iron. The external shaft 20 and the internal shaft 30 may be made of a material having predetermined rigidity and durability. A non-metallic material such as a resin may be employed as a part or entirety of the material.

The internal shaft 30 is attached to the external shaft 20 in a state in which the end of the internal shaft 30 is inserted into the external shaft 20. More specifically, the external shaft 20 and the internal shaft 30 are fitted together in a state in which one of the external shaft 20 and the internal shaft 30 is movable relative to the other in an axial direction of the telescopic shaft 10 and is non-rotatable about an axis of the other. That is, the telescopic shaft 10 has a structure in which the external shaft 20 and the internal shaft 30 slide relative to each other in the axial direction and engage with each other in a circumferential direction. The telescopic shaft 10 is connected to the steering column shaft 190 via a universal joint 29, and to the pinion shaft 191 via a universal joint 39. Thus, the steering column shaft 190 and the pinion shaft 191 having different axial directions can mechanically be connected together, and the rotational torque received from the steering column shaft 190 can be transmitted to the pinion shaft 191. The steering column shaft 190 and the telescopic shaft 10 may be referred to collectively as "steering shaft". In this case, the telescopic shaft 10 is a part of the steering shaft. The telescopic shaft 10 according to this embodiment is described below in more detail.

### 2. Structure of Telescopic Shaft

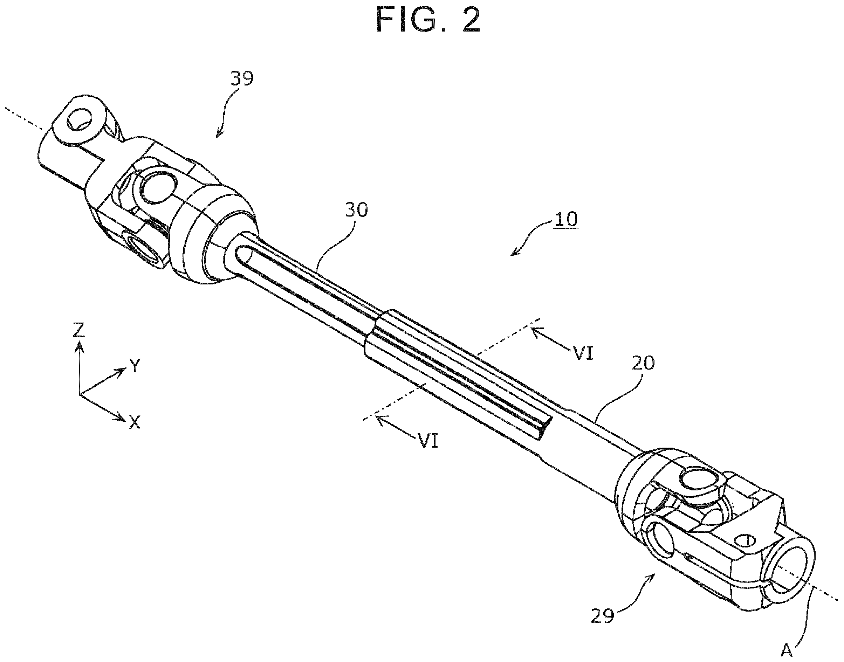

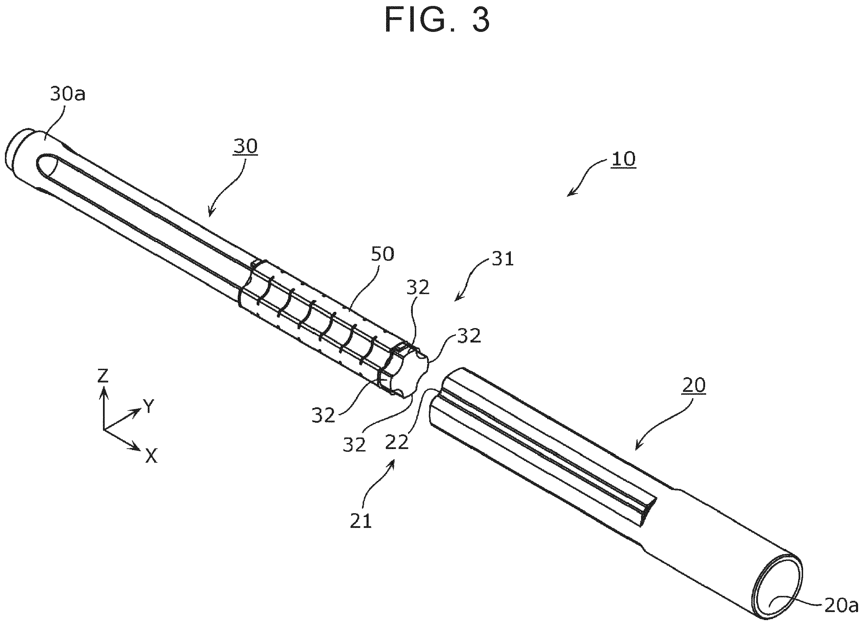

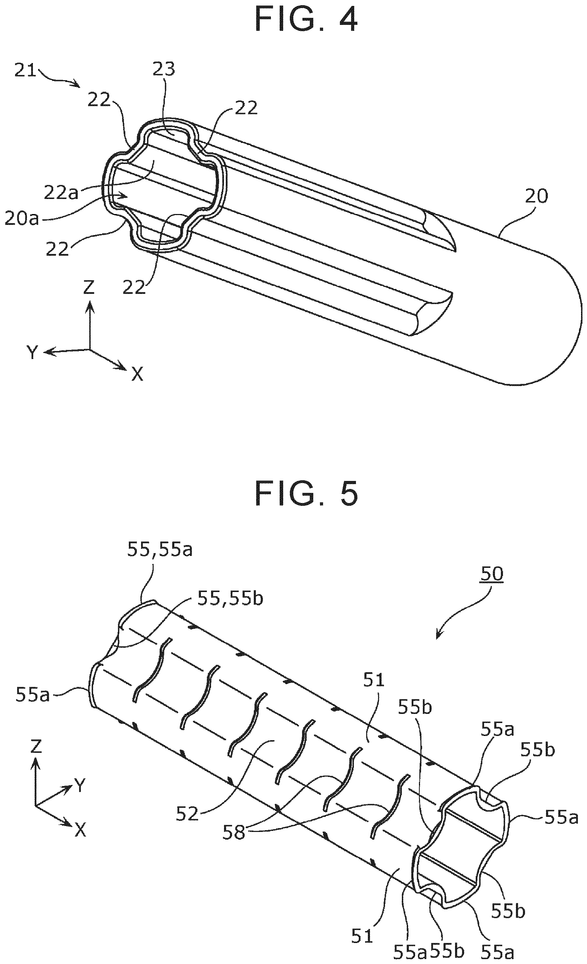

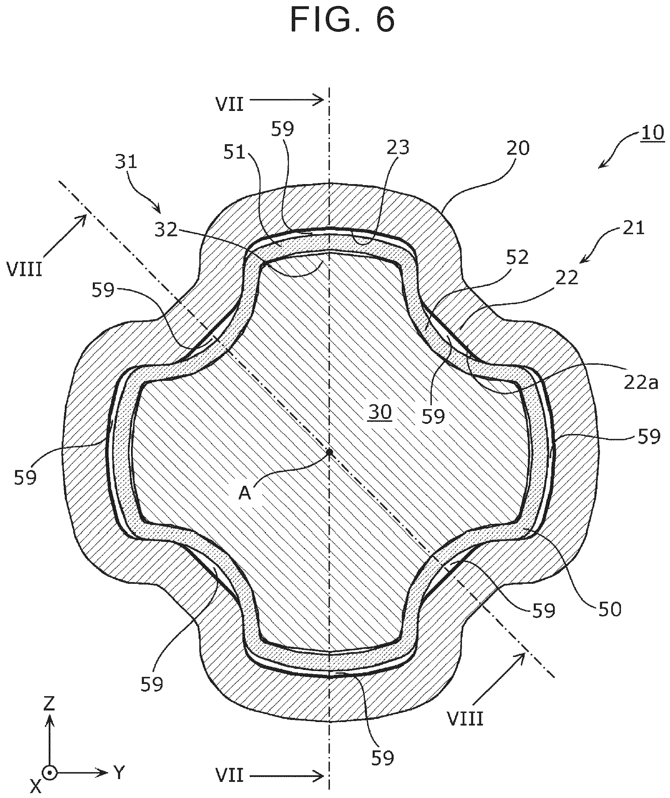

FIG. 2 is a perspective view of an appearance of the telescopic shaft 10 according to the embodiment. FIG. 2 illustrates a state in which the universal joints 29 and 39 are attached to both axial ends of the telescopic shaft 10. In FIG. 2 and other subsequent figures, a long dashed short dashed line and a dot with a reference symbol A indicate a rotational axis A (imaginary axis) of the telescopic shaft 10. Unless otherwise noted, the "axial direction" hereinafter refers to a direction parallel to the rotational axis A, and coincides with an X-axis direction in this embodiment. FIG. 3 is an exploded perspective view of the telescopic shaft 10 according to the embodiment. FIG. 4 is a perspective view of an appearance of the external shaft 20 according to the embodiment. FIG. 5 is a perspective view of an appearance of a sliding member 50 according to the embodiment. FIG. 6 is a first sectional view of the telescopic shaft 10 according to the embodiment. FIG. 6 is a sectional view of the telescopic shaft 10 in a YZ plane passing through a line VI-VI in FIG. 2.

As illustrated in FIG. 2, the telescopic shaft 10 includes the internal shaft 30 and the external shaft 20. As illustrated in FIG. 3 and FIG. 6, an external toothing 31 including a plurality of teeth 32 arrayed in the circumferential direction is formed on an outer peripheral surface 30a of the internal shaft 30. In this embodiment, the external toothing 31 includes four teeth 32 arrayed at regular intervals in the circumferential direction. As illustrated in FIG. 4 and FIG. 6, an internal toothing 21 is formed on an inner peripheral surface 20a of the external shaft 20. The internal toothing 21 includes a plurality of (four in this embodiment) teeth 22 arranged at positions where the internal toothing 21 meshes with the external toothing 31 of the internal shaft 30. The teeth 32 of the external toothing 31 extend in the axial direction on the internal shaft 30. The teeth 22 of the internal toothing 21 extend in the axial direction on the external shaft 20.

As described above, the telescopic shaft 10 according to this embodiment has a structure in which the external toothing 31 provided on the internal shaft 30 and including the teeth 32 projecting radially outward and the internal toothing 21 provided on the external shaft 20 and including the teeth 22 projecting radially inward mesh (engage) with each other in the circumferential direction. Thus, a rotational torque applied to one of the internal shaft 30 and the external shaft 20 is transmitted to the other. Since the external toothing 31 and the internal toothing 21 extend in the axial direction, the telescopic shaft 10 can change its total axial length while keeping the function of transmitting the rotational torque from one axial end to the other axial end.

In this embodiment, when the telescopic shaft 10 extends or contracts, the external shaft 20 and the internal shaft 30 do not directly slide, but slide via the sliding member 50 arranged between the external shaft 20 and the internal shaft 30 in a radial direction.

Specifically, as illustrated in FIG. 3, the telescopic shaft 10 includes the sliding member 50 arranged between the external toothing 31 and the internal toothing 21 and fixed to one of the external toothing 31 and the internal toothing 21. In this embodiment, the sliding member 50 is fixed to the external toothing 31 of the internal shaft 30. Although the fixing method is not particularly limited, the sliding member 50 is fixed to the external toothing 31 of the internal shaft 30 by an adhesive, welding, screw fastening, crimping, arrangement of a stopper, or any combination of those methods.

The sliding member 50 is made of a material such as resin having relatively small sliding friction. This material improves axial slippage of one of the internal shaft 30 and the external shaft 20 relative to the other. At a part where the internal shaft 30, the external shaft 20, and the sliding member 50 are arrayed in the radial direction, a clearance is present between the members, thereby improving the slippage as well.

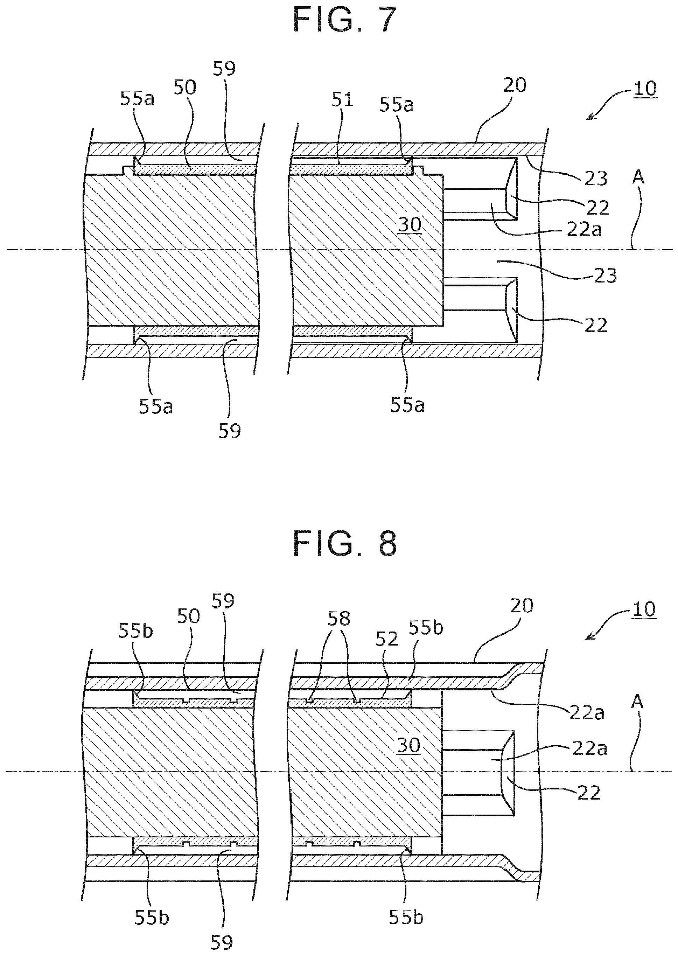

Specifically, as illustrated in FIG. 6, the sliding member 50 fixed to the external toothing 31 of the internal shaft 30 is arranged substantially in close contact with the outer surface of the external toothing 31 (teeth 32). A plurality of clearances 59 is present between the sliding member 50 and the internal toothing 21 (teeth 22) of the external shaft 20. More specifically, clearances 59 extending in the axial direction are present between tooth tips 22a of the teeth 22 of the internal toothing 21 and receding threads 52 of the sliding member 50. The receding threads 52 face the tooth tips 22a, and recede radially inward. Further, clearances 59 extending in the axial direction are present between bottom lands 23 of the internal toothing 21 and projecting threads 51 of the sliding member 50. Each bottom land 23 is formed between two adjacent teeth 22 of the internal toothing 21. The projecting threads 51 face the bottom lands 23, and project radially outward. The axial length of the clearance 59 is larger than the circumferential length (width) of the clearance 59. That is, the clearance 59 of this embodiment is a space elongated in the axial direction (depth direction in FIG. 6) (see FIG. 7 and FIG. 8).

As described above, the clearances 59 are present between the sliding member 50 and the internal toothing 21 of the external shaft 20 in the radial direction. The clearances 59 prevent an excessive increase in friction between the internal toothing 21 and the sliding member 50 fixed to the internal shaft 30. As a result, the sliding member 50 meshes with the internal toothing 21 so as to be slidable in the axial direction. As illustrated in FIG. 6, the sliding member 50 and the internal toothing 21 of the external shaft 20 have a relationship in which the sliding member 50 and the internal toothing 21 abut against each other in the circumferential direction. Therefore, the rotational torque of one of the internal shaft 30 and the external shaft 20 is securely transmitted to the other.

To further improve the slippage between the sliding member 50 and the internal toothing 21, a lubricant (for example, grease) is applied between the sliding member 50 and the internal toothing 21 of the external shaft 20. The grease spreads not only over the clearances 59, but also between the directly abutting circumferential side faces of each projecting thread 51 of the sliding member 50 and each tooth 22 of the internal toothing 21. Thus, the sliding member 50 and the internal toothing 21 slip more easily. As a result, the telescopic shaft 10 extends and contracts in the axial direction more smoothly.

In this embodiment, the sliding member 50 has a plurality of circumferential grooves 58 that functions as portions that store grease (so-called grease reservoirs) to increase the amount of grease applied between the sliding member 50 and the internal toothing 21 (see FIG. 5). The grease is stored in the circumferential grooves 58 by applying the grease to the outer peripheral surface of the sliding member 50 fixed to the internal shaft 30. In this state, the end of the internal shaft 30 where the sliding member 50 is fixed is inserted into the internal toothing 21 of the external shaft 20. Thus, the telescopic shaft 10 is assembled. When the telescopic shaft 10 extends or contracts, the sliding member 50 moves in the axial direction relative to the internal toothing 21, thereby supplying a part of the grease stored in the circumferential grooves 58 to a boundary between the sliding member 50 and the internal toothing 21.

As illustrated in FIG. 5, each circumferential groove 58 extends from the receding thread 52 to the projecting thread 51 on the sliding member 50. That is, the circumferential groove 58 is arranged so as to connect the clearance 59 between the tooth tip 22a and the receding thread 52 to the clearance 59 between the bottom land 23 and the projecting thread 51 in FIG. 6. Therefore, the grease is supplied to the two clearances 59 and the part between the two clearances 59 where the sliding member 50 and the internal toothing 21 abut against each other in the circumferential direction. Thus, the grease is distributed over a wide range between the sliding member 50 and the internal toothing 21 of the external shaft 20.

Since the clearance 59 extends from one axial end to the other axial end of the sliding member 50, the grease may leak from the axial ends of the sliding member 50 in the clearance 59. When the grease leakage amount increases, the grease retained between the sliding member 50 and a sliding counterpart (in this embodiment, the internal toothing 21 of the external shaft 20) decreases. Therefore, the sliding friction between the sliding member 50 and the internal toothing 21 increases. As a result, the smoothness of the extending and contracting motion of the telescopic shaft 10 is lost. Further, damage may be caused by, for example, wear of the sliding member 50.

In this embodiment, the sliding member 50 has walls 55 at positions of its axial ends in the clearances 59 as illustrated in FIG. 5, FIG. 7, and FIG. 8. FIG. 7 is a second sectional view of the telescopic shaft 10 according to the embodiment. FIG. 8 is a third sectional view of the telescopic shaft 10 according to the embodiment. FIG. 7 illustrates a part of a cross section VII-VII in FIG. 6. FIG. 8 illustrates a part of a cross section VIII-VIII in FIG. 6.

As illustrated in FIG. 5, FIG. 7, and FIG. 8, the sliding member 50 has the walls 55 provided upright in the radial direction at its axial ends in the clearances 59 to suppress axially outward leakage of the grease from the clearances 59. As illustrated in FIG. 5 and FIG. 7, the wall 55 located at the end of the sliding member 50 in the clearance 59 between the bottom land 23 and the projecting thread 51 is referred to as "wall 55a". As illustrated in FIG. 5 and FIG. 8, the wall 55 located at the end of the sliding member 50 in the clearance 59 between the tooth tip 22a and the receding thread 52 is referred to as "wall 55b".

As described above, the telescopic shaft 10 according to this embodiment is extensible and contractible in the axial direction, and includes the internal shaft 30, the external shaft 20, and the sliding member 50. The internal shaft 30 includes the external toothing 31 formed on the outer peripheral surface 30a. The external toothing 31 includes the teeth 32 arrayed in the circumferential direction. The external shaft 20 includes the internal toothing 21 formed on the inner peripheral surface 20a. The internal toothing 21 includes the teeth 22 arranged at the positions where the internal toothing 21 meshes with the external toothing 31. The sliding member 50 is arranged between the external toothing 31 and the internal toothing 21, fixed to the external toothing 31, that is, one of the external toothing 31 and the internal toothing 21, and slidable in the axial direction relative to the internal toothing 21, that is, the other one of the external toothing 31 and the internal toothing 21. The sliding member 50 has the walls 55 at its axial ends in the clearances 59 extending in the axial direction between the sliding member 50 and the internal toothing 21. The walls 55 protrude toward the internal toothing 21.

According to this structure, the telescopic shaft 10 can extend and contract such that the external shaft 20 and the internal shaft 30 slide via the sliding member 50, and the rotational torque applied to one of the external shaft 20 and the internal shaft 30 can be transmitted to the other such that the internal toothing 21 and the external toothing 31 mesh with each other via the sliding member 50. Since the clearances 59 are present between the sliding member 50 and the internal toothing 21, the lubricant such as grease can be applied to the clearances 59. The walls 55 of the sliding member 50 suppress the leakage of the grease from the clearances 59. Therefore, it is possible to attain an effect of improvement in the slidability by the grease, and to suppress troubles with the extending and contracting motion of the telescopic shaft 10 due to grease depletion, or damage that may be caused by, for example, wear of the sliding member 50. Thus, the telescopic shaft 10 according to this embodiment can be improved in reliability.

In this embodiment, as illustrated in FIG. 6, the clearance 59 is present between the tooth tip 22a of the internal toothing 21 and the receding thread 52 of the sliding member 50 that faces the tooth tip 22a. As illustrated in FIG. 5 and FIG. 8, the walls 55b are provided at the axial ends of the receding thread 52.

In the telescopic shaft 10 according to this embodiment, the clearance 59 where the walls 55b are arranged to suppress the grease leakage is present between the tooth tip 22a and the receding thread 52 that face each other in the radial direction and are substantially unrelated to the transmission of the rotational torque. Thus, the telescopic shaft 10 can keep or improve the smoothness of the extending and contracting motion without impairing the function of transmitting the rotational torque.

In this embodiment, as illustrated in FIG. 6, the clearance 59 is present between the bottom land 23 of the internal toothing 21 and the projecting thread 51 of the sliding member 50 that faces the bottom land 23. As illustrated in FIG. 5 and FIG. 7, the walls 55a are provided at the axial ends of the projecting thread 51.

In the telescopic shaft 10 according to this embodiment, the clearance 59 where the walls 55a are arranged to suppress the grease leakage is present between the bottom land 23 and the projecting thread 51 that face each other in the radial direction and are substantially unrelated to the transmission of the rotational torque. Thus, the telescopic shaft 10 can keep or improve the smoothness of the extending and contracting motion without impairing the function of transmitting the rotational torque.

In this embodiment, as illustrated in FIG. 7 and FIG. 8, the sliding member 50 has the walls 55 at both axial ends of the sliding member 50 in the clearances 59. The clearances 59 are present continuously between the walls 55 at both ends. Specifically, the sliding member 50 has the walls 55a at both axial ends of the projecting thread 51, and the walls 55b at both axial ends of the receding thread 52.

In the sliding member 50 according to this embodiment, the walls 55 are arranged at both axial ends of the sliding member 50 in the clearance 59 that stores the grease. Therefore, the grease leakage is suppressed more securely. Thus, the smoothness of the extending and contracting motion of the telescopic shaft 10 is kept for a long time. The end of the sliding member 50 where the wall 55 is arranged falls within a predetermined range in the axial direction, including an axial edge of the sliding member 50 (for example, a range of several millimeters from the edge, or a range from the edge to a point corresponding to 1/10 of the axial length of the sliding member 50). The wall 55 need not be provided upright from the axial edge of the sliding member 50, but may be provided upright to prevent the grease leakage at a position on an inner side of the axial edge of the sliding member 50 (position closer to the opposite edge).

In this embodiment, the surface of the sliding member 50 that faces the internal toothing 21 across the clearances 59 has the circumferential grooves 58 extending in the circumferential direction and receding away from the internal toothing 21. The walls 55 protrude toward the internal toothing 21 from the surface of the sliding member 50 that faces the external toothing 31.

According to this structure, the grease is supplied via the circumferential grooves 58 from the clearance 59 that stores the grease to the space between two members abutting against each other in the circumferential direction (between the circumferential side face of the projecting thread 51 and the circumferential side face of the tooth 22). Thus, the slidability between the internal toothing 21 and the sliding member 50 is further improved.

As described above, the steering system 100 according to this embodiment is configured to steer the vehicle, and includes the telescopic shaft 10 configured to transmit a rotational torque to be used for turning the steered wheels 210.

That is, the steering system 100 includes the telescopic shaft 10 according to this embodiment as a member having an important role of transmitting the rotational torque for turning the steered wheels 210. Thus, the reliability of the steering system 100 can be improved.

Although the steering system 100 according to the embodiment is described above, the steering system 100 may have a telescopic shaft having a structure different from the structure illustrated in FIG. 1 to FIG. 8 as the telescopic shaft configured to transmit the rotational torque for turning the steered wheels 210. A modified example of the telescopic shaft is described below mainly about a difference from the embodiment.

### Modified Example

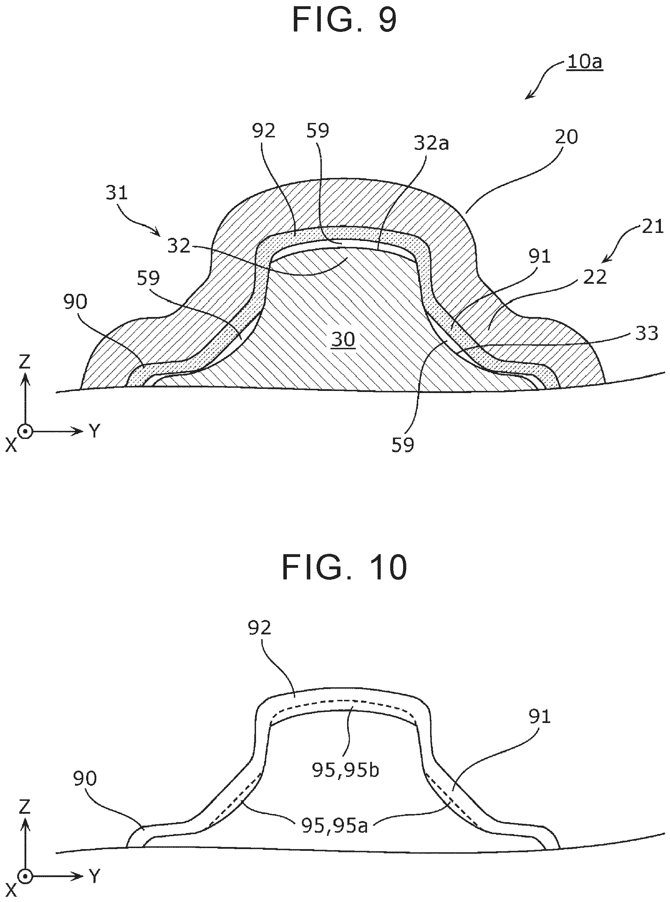

FIG. 9 is a local sectional view of a telescopic shaft 10a according to the modified example of the embodiment. The position of a cross section in FIG. 9 coincides with the position of the cross section in FIG. 6. FIG. 10 is a diagram illustrating a part of the axial end of a sliding member 90 according to the modified example of the embodiment.

The telescopic shaft 10a according to this modified example may be a substitute for the telescopic shaft 10 in the steering system 100 according to the embodiment (see FIG. 1). Similarly to the telescopic shaft 10 according to the embodiment, the telescopic shaft 10a includes the internal shaft 30 and the external shaft 20. The sliding member 90 is arranged between the external toothing 31 of the internal shaft 30 and the internal toothing 21 of the external shaft 20. The overall shape of the sliding member 90 is in common with the shape of the sliding member 50 according to the embodiment (see FIG. 5), but the positions of walls 95 differ from the positions of the walls of the sliding member 50.

Specifically, the sliding member 90 of this modified example is fixed to the internal toothing 21 of the external shaft 20 instead of the external toothing 31 of the internal shaft 30. Although the fixing method is not particularly limited, the sliding member 90 is fixed to the internal toothing 21 by an adhesive, welding, screw fastening, crimping, arrangement of a stopper, or any combination of those methods.

Since the sliding member 90 is fixed to the internal toothing 21, the sliding member 90 is arranged substantially in close contact with the outer surface of the internal toothing 21 (teeth 22). The clearances 59 are present between the sliding member 90 and the external toothing 31 (teeth 32) of the internal shaft 30. More specifically, the clearances 59 are present between tooth tips 32a of the teeth 32 of the external toothing 31 and receding threads 92 of the sliding member 90. The receding threads 92 face the tooth tips 32a, and recede radially outward. Further, the clearances 59 are present between bottom lands 33 of the external toothing 31 and projecting threads 91 of the sliding member 90. Each bottom land 33 is formed between two adjacent teeth 32 of the external toothing 31. The projecting threads 91 face the bottom lands 33, and project radially inward.

As illustrated in FIG. 10, the sliding member 90 according to this modified example has the walls 95 for the clearances 59. The walls 95 are provided at the axial ends of the sliding member 90 in the clearances 59. Specifically, walls 95b are arranged at the axial ends of the receding threads 92 of the sliding member 90, and walls 95a are arranged at the axial ends of the projecting threads 91 of the sliding member 90. The walls 95a and 95b are provided upright toward the radially inner side on the sliding member 90. The walls 95a and 95b suppress grease leakage from the clearances 59 present between the sliding member 90 and the external toothing 31. Thus, the telescopic shaft 10a can keep or improve the smoothness of the extending and contracting motion without impairing the function of transmitting the rotational torque.

The walls 95a and 95b may be provided at both axial ends of the sliding member 90. Thus, the grease leakage suppression effect is improved. Circumferential grooves extending in the circumferential direction may be formed on the surface of the sliding member 90 that faces the external toothing 31 across the clearances 59. Therefore, the grease is supplied via the circumferential grooves from the clearance 59 that stores the grease to the space between two members abutting against each other in the circumferential direction (between the circumferential side face of the receding thread 92 and the circumferential side face of the tooth 32). Thus, the slidability between the internal toothing 21 and the sliding member 90 is further improved.

### Other Embodiments

The steering system according to the present invention has been described above based on the embodiment and its modified example. However, the present invention is not limited to the embodiment and the modified example. Without departing from the spirit of the present invention, the scope of the present invention encompasses various modifications to the embodiment or the modified example that are conceivable to persons having ordinary skill in the art, or modes obtained by combining a plurality of the constituent elements described above.

For example, the number of teeth of each of the external toothing 31 and the internal toothing 21 may be a number other than four. The external toothing 31 and the internal toothing 21 may have pluralities of teeth that engage with each other in the circumferential direction. Each of the external toothing 31 and the internal toothing 21 preferably has two or more teeth evenly arrayed in the circumferential direction.

The sliding member 50 may have at least one of the wall 55a provided at the axial end of the projecting thread 51 and the wall 55b provided at the axial end of the receding thread 52. Further, the wall 55a may be provided at only one of the two axial ends of the projecting thread 51, and the wall 55b may be provided at only one of the two axial ends of the receding thread 52. That is, when the clearances are present between the sliding member 50 and the sliding counterpart, the amount of grease leaking from the space between the sliding member 50 and the sliding counterpart can be reduced as long as the wall is provided at, at least one axial end of the sliding member 50 in the clearance.

Although the telescopic shaft 10 according to the embodiment is arranged between the steering column shaft 190 and the pinion shaft 191, the telescopic shaft 10 may be employed as a part or entirety of the steering column shaft 190. The steering column shaft 190 may have a function of extending and contracting in its axial direction to, for example, adjust the position of the operation member 200. By employing the telescopic shaft 10 as a part or entirety of the steering column shaft 190, the rotational torque generated by the driver who operates the operation member 200 can be transmitted to, for example, the pinion shaft 191 on the downstream side. Further, smoothness of movement of the operation member 200 can be kept or improved.

The telescopic shaft 10 may be mounted on a steer-by-wire system in which the operation member 200 is not mechanically connected to the steered wheels. For example, the operation member 200 of the steer-by-wire system may require a function of moving in the axial direction in order to retract the operation member 200 into a predetermined retraction area in front of a driver's seat. By employing the telescopic shaft 10 as a shaft member to which the operation member 200 is coupled at one end, the steering operation can appropriately be performed based on the rotational torque generated through an operation for the operation member 200. Further, the smoothness of the movement of the operation member 200 can be kept or improved.

The shape and number of the circumferential grooves 58 need not be the shape and number illustrated in FIG. 5 or the like. For example, the circumferential groove 58 may be provided in one or more loops in the circumferential direction around the outer peripheral surface of the sliding member 50.

The circumferential groove 58 may be omitted from the sliding member 50. Also in this case, the sliding member 50 can attain the grease leakage suppression effect by providing the walls 55.

Various supplementary remarks described above about the sliding member 50 according to the embodiment may be applied to the sliding member 90 according to the modified example.

The steering system according to the present invention is useful as a steering system to be provided in a vehicle such as an automobile.

## Claims

1. A telescopic shaft (10; 10a) extensible and contractible in an axial direction, the telescopic shaft (10; 10a) **characterized by** comprising:
an internal shaft (30) having an external toothing (31) on an outer peripheral surface (30a), the external toothing (31) including a plurality of teeth arrayed in a circumferential direction;
an external shaft (20) having an internal toothing (21) on an inner peripheral surface (20a), the internal toothing (21) including a plurality of teeth disposed at positions where the internal toothing (21) meshes with the external toothing (31); and
a sliding member (50; 90) disposed between the external toothing (31) and the internal toothing (21) and fixed to one of the external toothing and the internal toothing, the sliding member (50; 90) disposed so as to be slidable in the axial direction relative to the other one of the external toothing (31) and the internal toothing (21),
the sliding member (50; 90) including a wall (55; 95) at an end of the sliding member (50, 90) between the sliding member (50; 90) and the other one of the external toothing (31) and the internal toothing (21), the wall (55; 95) protruding toward the other one of the external toothing (31) and the internal toothing (21), the end being an axial end of the sliding member (50, 90) in a clearance extending in the axial direction.

2. The telescopic shaft (10; 10a) according to claim 1, **characterized in that**:
the clearance is positioned between a tooth tip (22a; 32a) of the other one of the external toothing (31) and the internal toothing (21) and a receding thread of the sliding member (50; 90), the receding thread positioned so as to face the tooth tip (22a; 32a); and
the wall (55; 95) is provided at an axial end of the receding thread.

3. The telescopic shaft (10; 10a) according to claim 1 or 2, **characterized in that**:
the clearance is positioned between a bottom land (23; 33) of the other one of the external toothing (31) and the internal toothing (21) and a projecting thread of the sliding member (50; 90), the projecting thread positioned so as to face the bottom land (23; 33); and
the wall (55; 95) is provided at an axial end of the projecting thread.

4. The telescopic shaft (10; 10a) according to any one of claims 1 to 3, **characterized in that**:
the sliding member (50; 90) includes the wall (55; 95) at each of both axial ends of the sliding member (50; 90); and
the clearance is positioned continuously between the walls at both the axial ends.

5. The telescopic shaft (10; 10a) according to any one of claims 1 to 4, **characterized in that**:
a surface of the sliding member (50; 90) that faces the other one of the external toothing (31) and the internal toothing (21) across the clearance has a circumferential groove extending in the circumferential direction and receding away from the other one of the external toothing (31) and the internal toothing (21); and
the wall (55; 95) is provided so as to protrude from the surface toward the other one of the external toothing (31) and the internal toothing (21).

6. A steering system (100) for steering a vehicle, the steering system (100) **characterized by** comprising the telescopic shaft (10; 10a) according to any one of claims 1 to 5, which is configured to transmit a rotational torque to be used for turning a steered wheel.
